# EUROPÄISCHE PATENTSCHRIFT

(11) **EP 1 729 051 B1**
(45) Veröffentlichungstag und Bekanntmachung des Hinweises auf die Patenterteilung: **08.10.2008**
(21) Anmeldenummer: 06011100.2
(22) Anmeldetag: 30.05.2006
(51) Int. Cl.: F16L 37/23

(54) **Vereinfachte Kupplung für Atemschutzgeräte**
Simplified coupling for breathing apparatus
Accouplement simplifie pour appareils respiratoires

(30) Priorität: 01.06.2005 DE 102005025548
(43) Veröffentlichungstag der Anmeldung: 06.12.2006
(73) Patentinhaber: TEMA Marketing AG, 6300 Zug (CH)
(72) Erfinder: Witt, Stefan, 71735 Eberdingen-Nussdorf (DE); Seifert, Jürgen, 71665 Vaihingen-Ensingen (DE)
(74) Vertreter: Rüger, Barthelt & Abel Patentanwälte

(56) Entgegenhaltungen:
- EP-A- 0 024 068
- WO-A-01/73335
- DE-A1- 3 015 485
- US-A- 2 854 259
- US-A- 3 507 523

## Beschreibung

Atemschutzgeräte, beispielsweise für Feuerwehrleute, bestehen aus einem am Körper angeschnallten Traggestell, an dem der Lungenautomat befestigt ist. Von dem Lungenautomaten gehen Atemschläuche zu einem Mundstück, das der Feuerwehrmann im Einsatzfall im Mund trägt, oder einer Gesichtsmaske.

Die Atemluft kommt aus einer Pressluftflasche mit einem konstruktiven Volumen von ca. 6 bis 10 Litern. Um ein genügendes Volumen speichern zu können, wird die Luft in der Flasche auf ca. 300 bar verdichtet.

Die Atemluftverbindung von der Flasche zu dem Lungenautomaten ist trennbar. Auf diese Weise kann die Atemluftflasche im Einsatzfahrzeug gefahrlos wieder gefüllt werden. Die gefüllte Flasche wird am Traggestell befestigt und strömungsmäßig mit dem Lungenautomaten verbunden.

Das Anschließen sollte relativ schnell gehen, um Zeitverlust zu vermeiden. Außerdem muss die Verbindung einfach handhabbar sein. Jede komplizierte Handhabung würde eine potentielle Gefahrenstelle bilden. Insbesondere muss es möglich sein, die Verbindung auch mit einer behandschuhten Hand zu betätigen.

Die versehentliche Öffnung der Kupplung zwischen Buchse und Stecker muss unbedingt vermieden werden. Im Einsatzfall könnte diese zu einer Gefahrensituation für den Feuerwehrmann werden.

Die Pressluftflasche ist mit einem eigenen Handventil versehen, damit das Anschließen der Pressluftflasche sowohl an die Pumpe als auch an den Lungenautomaten druckfrei erfolgen kann, was wesentlich den Kupplungsvorgang vereinfacht.

Beim Öffnen des Flaschenventils sollte auch keine gefährliche Luftentströmung entstehen. Außerdem muss das Ventil so gestaltet sein, dass Verunreinigungen möglichst ausgeschlossen sind.

Aus der DE 30 15 485 A1 ist eine Kupplung bekannt, über die eine Druckluftverbindung herstellbar ist. Die bekannte Kupplung weist ein Außengehäuse auf, in dem eine Schiebehülse axial beweglich ist. Zwischen dem Außengehäuse und der Schiebehülse ist ein zylindrischer Ringraum ausgebildet, der zur Hälfte in der Schiebehülse und zur anderen Hälfte in dem Außengehäuse enthalten ist. Dadurch entstehen, in Längsrichtung gesehen, stirnseitige Ringflächen, die miteinander fluchten, wenn sich die Schiebehülse in einer vorbestimmten Stellung gegenüber dem Außengehäuse befindet. In dieser zentrierten Stellung werden Haltekugeln durch entsprechende Vorsprünge so gehalten, dass sie in das Lichtraumprofil der Schiebehülse vorragen, um dort einen eingesteckten Stecker abgedichtet zu verriegeln. Der Ringraum dient gleichzeitig als Fluidraum, der über eine Bohrung mit dem Druckraum innerhalb der Schiebehülse verbunden ist. Solange der Ringraum unter einem genügend hohen Druck steht, kann die Schiebehülse gegenüber der Außenhülse nicht bewegt werden. Sobald der Druck unter einen vorbestimmten Druck abgesunken ist, kann der Stecker entnommen werden, indem der Stecker samt Schiebehülse gegenüber der Kupplung auf Zug belastet wird.

Ausgehend hiervon ist es Aufgabe der Erfindung eine Fluidkupplung für Atemschutzgeräte zu schaffen, die die obigen Bedingungen, zumindest zum Teil, erfüllt.

Diese Aufgabe wird erfindungsgemäß durch eine Steckkupplung mit den Merkmalen des Anspruches 1 gelöst.

Bei der neuen Steckkupplung ist ein Buchsenkörper vorgesehen, der einen Aufnahmeraum für einen Stecker enthält, und einen Gewindeansatz aufweist. In dem Buchsenkörper sind Rastmittel beweglich gelagert, die dazu dienen, den Stecker in dem Aufnahmeraum festzuhalten, wenn sich der Stecker in der eingesteckten bzw. abgedichteten Einsteckstellung befindet.

Auf dem Buchsenkörper ist eine äußere Verrieglungshülse verschieblich gelagert, die mit den Rastmitteln zusammenwirkt. Die Verrieglungshülse ist zwischen zwei Axialstellungen hin und her bewegbar. In der einen Axialstellung sichert die Verrieglungshülse die Rastmittel in der Verriegelungsstellung für den Stecker. In der anderen Stellung gibt die Verrieglungshülse die Bewegung der Rastmittel frei, so dass der Stecker eingesteckt oder auch entnommen werden kann.

Um eine Betätigung Der Betätigungshülse mit Sicherheit zu verhindern, wenn in dem Luftraum zwischen der Steckbuchse und dem Stecker ein Gasdruck oberhalb eines bestimmten Niveaus besteht, ist ein abgedichteter Ringraum vorgesehen, dessen eine Axialfläche axial fest an dem Buchsenkörper ist, während die andere Axialfläche an der Betätigungsfläche axial fest ist. Dieser Ringraum hat eine strömungsmäßige Verbindung zu dem Aufnahmeraum, womit der Druck in dem Strömungsverbindung zwischen dem Lungenautomaten und der Flasche auch in dem Ringraum herrscht.

Unabhängig von sonstigen Maßnahmen wird damit zwangsläufig verhindert, dass die Verrieglungshülse gegen die Wirkung des dort herrschenden Druckes in Entriegelungsposition gebracht werden kann.

Wie bei Steckkupplungen üblich, ist der Aufnahmeraum im Wesentlichen rotationssymmetrisch und/oder Teil einer Stufenbohrung.

Der Aufnahmeraum ist über eine koaxiale Einstecköffnung für den Stecker zugänglich.

Aus montagetechnischen Gründen besteht der Buchsenkörper vorteilhafterweise aus einem rückwärtigen Anschlussstück, das bei entsprechender Einbaulage mit dem Lungenautomaten verbunden ist sowie einem vorderen Buchsenteil, der den Aufnahmeraum enthält. Diese beiden Teile sind vorteilhafterweise miteinander verschraubt.

Der Stecker für derartige Atemschutzgeräte enthält ein Drosselventil. Mit Hilfe des Drosselventils soll verhindert werden, dass bei versehentlichem Öffnen des Handventils an der Flasche eine gefährdende Luftströmung entsteht. Diese Drosselstelle würde, wenn sie nicht betätigt oder geöffnet wird, die Luftmenge begrenzen, die von der Flasche zu dem Feuerwehrmann gelangen kann, und zwar unter einem Wert, der den Feuerwehrmann gefährdet.

Um die Drosselstelle im Stecker unwirksam zu machen, enthält der Aufnahmeraum einen Stößel. Der Stößel ist koaxial zu dem Aufnahmeraum angeordnet. Die Rastmittel umfassen im einfachsten Falle wenigstens eine Kugel, die in einer Bohrung sitzt, die radial zur Längserstreckung des Aufnahmeraums ausgerichtet ist.

Die Wandstärke des Aufnahmeraums ist im Bereich des Rastmittels kleiner, als der Durchmesser des Rastmittels selbst. Dadurch kann das Rastmittel in eine Stellung gebracht werden, in der es in den Lichtraum des Aufnahmeraums hineinragt, während es außen mit der Außenfläche des Buchsenkörpers bündig ist. In der anderen Stellung, in der das Rastmittel nicht in das Lichtraumprofil des Aufnahmeraums ragt, steht es außen über den Buchsenteil über, um so die Verrieglungshülsen der Entriegelungs- oder Entkuppelstellung festzuhalten.

Einfache Montage- und Herstellungsverhältnisse ergeben sich, wenn der Buchsenkörper, zumindest im Bereich des Aufnahmeraums, außen rotationssymmetrisch ist.

Um bei entnommenem Stecker die Steckbuchse in einer Relativlage der einzelnen Teile zueinander zu halten, die ein Einstecken des Steckers ermöglicht, ist eine Steuerhülse vorgesehen. Die Steuerhülse wird vorzugsweise durch eine Feder in eine Stellung vorgeschoben, in der sie sich im Bewegungsweg der Rastmittel befindet.

Die Steuerhülse kann gleichzeitig auch noch als Drosselventil wirken, um mit Sicherheit eine schlagartige Entlüfung der Steckbuchse beim Trennen zu vermeiden.

Damit die Steuerhülse ihre Wirkung als Drosselstellung entfalten kann, ist sie zweckmäßigerweise zur Wand des Aufnahmeraums hin abgedichtet. Dadurch wird ein Entlüftungsweg durch die Kanäle, in denen die Rastmittel sitzen, vermieden.

Mittels eines Anschlags kann ein Herausdrängen der Steuerhülse aus dem Aufnahmeraum verhindert werden.

Die Verriegelungshülse ist vorteilhafterweise zweiteilig ausgebildet und setzt sich aus einem radial inneren Verriegelungshülsenabschnitt und einem radial äußeren Verriegelungshülsenabschnitt zusammen. Diese beiden Verriegelungshülsenabschnitte sind zumindest in axialer Richtung gegeneinander unbeweglich. Sie können einen Ringraum begrenzen, in dem eine Rückholfeder angeordnet ist. Die Rückholfeder sorgt dafür, dass mit eingestecktem Stecker die Verrieglungshülse in einer Stellung bleibt, in der die Rastmittel den Stecker festhalten, und zwar auch dann, wenn die Steckverbindung druckfrei ist. Insoweit wirkt die Rückholfeder in der gleichen Weise, wie der unter Druck gesetzte Ringraum.

Im einfachsten Falle ist die Rückholfeder eine Schraubendruckfeder.

Eine weitere Verbesserung der Sicherheit ergibt sich, wenn das Zurückschieben der Verriegelungshülse im Sinne eines Freigebens des Steckers erst möglich ist, nachdem die Verriegelungshülse ein Stück weit in Umfangsrichtung gedreht ist. Dadurch wird ein versehentliches Entkuppeln auch dann verhindert, wenn der Flaschendruck mittlerweile auf niedrige Werte abgesunken ist. Durch die vorgeschaltete Drehbewegung wird ein versehentliches Öffnen der Steckverbindung zwischen der Buchse und den Stecker dann verhindert, wenn der Feuerwehrmann mit der Anordnung aus Gestell und Flasche ungünstig gegen einen festen Gegenstand anstößt.

Die kombinierte Dreh- und Schiebebewegung wird am einfachsten mit Hilfe einer Nockenfläche gesteuert, die am Buchsenkörper vorgesehen ist, die mit einem Nockenfolger zusammenwirkt, der an der Verrieglungshülse sitzt.

Im Übrigen sind Weiterbildungen der Erfindung Gegenstand von Unteransprüchen.

In der nachfolgenden Figurenbeschreibung ist anhand eines Beispiels das Grundprinzip der Erfindung erläutert. Für den Fachmann ist klar, dass eine Reihe von Abwandlungen möglich sind, um die Kupplung an die jeweiligen Gegebenheiten anzupassen.

In den Figuren ist ein Ausführungsbeispiel des Gegenstandes der Erfindung dargestellt. Es zeigen:
- Fig. 1: die erfindungsgemäße Steckbuchse einer Fluidkupplung in einer Explosionsdarstellung und teilweise ge- schnitten;
- Fig. 2: die Steckbuchse nach Fig. 1 im montierten Zustand, teilweise aufgeschnitten;
- Fig. 3: den zugehörigen Stecker mit Normanschluss, in einer perspektivischen, teilweise geschnittenen Darstel- lung und
- Fig. 4: die Steckbuchse zusammen mit dem Stecker in zwei unterschiedlichen Betriebsstellungen.

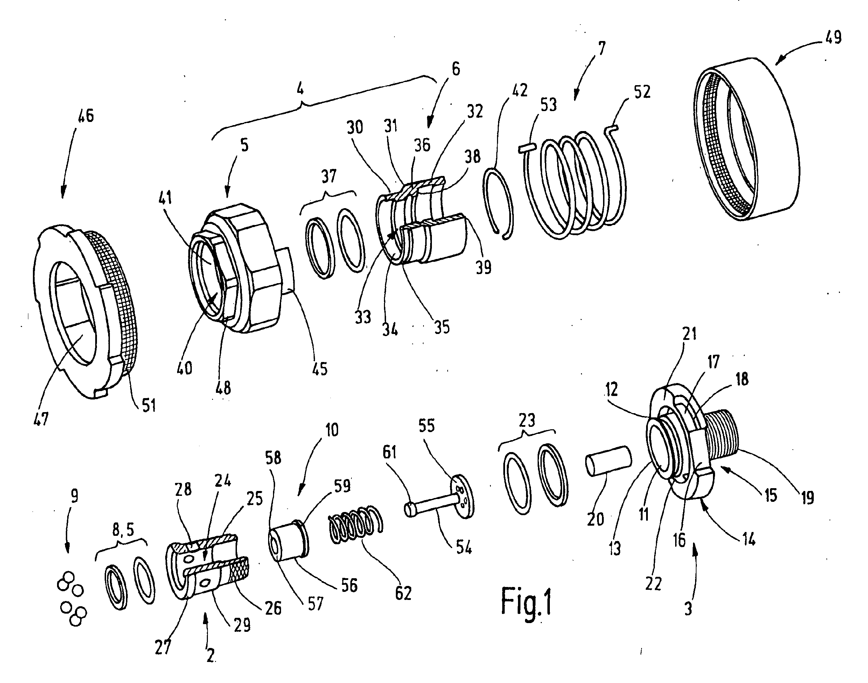

Wie Fig. 1 erkennen lässt, gehört zu der Steckbuchse 1 ein zweiteiliger Grundkörper, bestehend aus einem vorderen Grundkörperteil 2 und einem hinteren Grundkörperteil 3. Ferner gehört zu der Steckbuchse 1 eine zweiteilige Verriegelungshülse 4, die sich aus einem äußeren Verrieglungshülsenteil 5 und einem inneren Verriegelungshülsenabschnitt 6 zusammensetzt.

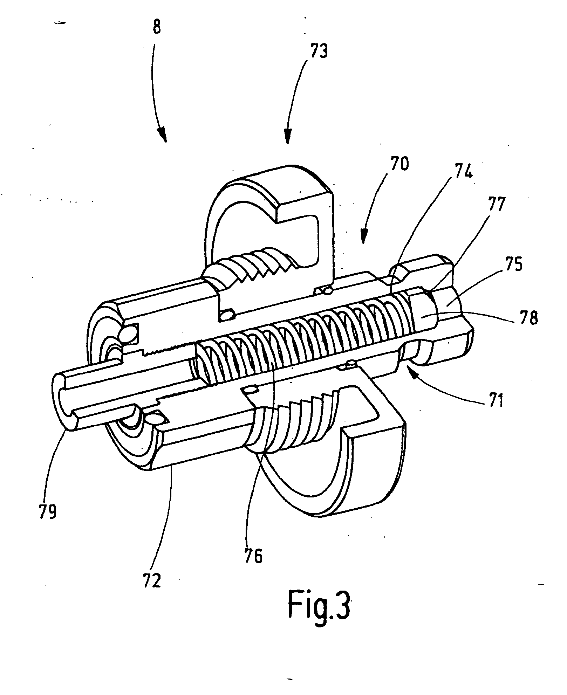

Die Bewegung der Verriegelungshülse 4 in die Ausgangsstellung wird über eine Schraubenfeder 7 bewerkstelligt. Das Arretieren eines Steckers 8, wie in Fig. 3 gezeigt ist, erfolgt mit Haltekugeln 9, deren Bewegung zusätzlich über eine Steuerhülse 10 beeinflusst wird.

Der hintere Grundkörperabschnitt 3 ist ein einstückiges Teil und im Wesentlichen rohrförmig. In seinem vorderen Bereich enthält er ein Innengewinde 11, das koaxial zu einer Umfangsfläche 12 geordnet ist, die an einer Stirnflächen 13 endet. Am hinteren Ende geht die Umfangsfläche 12 in einen Flansch 14 über, der ein Stück weit nach vorne über die Umfangsfläche 12 ragt. An der Außenseite enthält der Flansch 14 zwei diametral gegenüberliegende Nockenbahnen 15. Jede Nockenbahn 15 setzt sich aus einer durch den Rand des Flansches 14 hindurchführenden Nut 16 und einer Ausnehmung 17 zusammen, die bei der Nut 16 beginnt und sich ein Stück weit in Umfangsrichtung erstreckt. Die Ausnehmung 17 endet in axialer Richtung an einem Boden 18.

Die genaue Dimensionierung der Nockenbahn 15 ergibt sich aus der weiter unten gegebenen Funktionsbeschreibung.

Auf der Rückseite des Flansches 14 endet der hintere Grundkörperteil 3 in einem rohrförmigen Gewindeansatz 19 mit Außengewinde, mit dem die Steckbuchse 1 beispielsweise in eine Schlauchverbindung für einen Lungenautomaten eingeschraubt ist.

Im Inneren des Gewindeansatzes 19 sitzt ein Filter 20.

Der Flansch 14 bildet gleichzeitig das Widerlager für die Feder 7 und enthält zusätzlich eine achsparallele seitlich versetzte Bohrung 21. In einer Nut 22 in der Umfangsfläche 12 sitzt eine Dichtungspackung 23 aus einem O-Ring und ein Stützring.

Der vordere Grundköperteil 2 ist ebenfalls im Wesentlichen rohrförmig und enthält eine Stufenbohrung 24, die sich zum hinteren Ende (in der Figur dem rechten Ende) erweitert und eine Anlageschulter 25 definiert. Im hinteren Bereich ist der vordere Grundköperteil 2 mit einem Außengewinde 26 versehen, das in das Innengewinde 11 des hinteren Grundkörperteils 3 hineinpasst. Im vorderen Bereich trägt der vordere Grundkörperteil 2 einen radial nach außen stehenden Bund 27, der als Anschlag für die Verrieglungshülse 4 dient. In einem geringen Abstand hinter dem Bund 27 führen durch den vorderen Grundkörperteil 2 eine Reihe von Radialbohrungen 28, die als Sitz für die Haltekugeln 9 dienen.

Im Bereich zwischen dem Bund 27 und dem Außengewinde 26 wird der vordere Grundkörperteil 2 von einer zylindrischen Außenumfangsfläche 29 begrenzt.

Die Wandstärke im Bereich der Radialbohrungen 28 ist kleiner als der Durchmesser der Haltekugeln 9. Auf diese Weise ragen die Haltekugeln 9 in die Stufenbohrung 24 hinein, wenn sie außen mit der Umfangsfläche 29 bündig sind, oder sie stehen über die Umfangsfläche 29 radial nach außen über, wenn sie mit der Wand der Stufenbohrung 24 bündig sind.

Der innere Verrieglungshülsenabschnitt 6 ist ein rohrförmiges Bauteil mit einem vorderen verjüngten Abschnitt 30, der über eine Schulter 31 in einen hinteren Abschnitt 32 mit größerem Durchmesser übergeht. Beide Abschnitte 30, 32 sind außen zylindrisch.

Eine durch den inneren Verrieglungshülsenabschnitt 6 hindurchführende Öffnung 33 verjüngt sich, ausgehend von einem ersten Abschnitt 34 im Bereich einer kegelstumpffömigen Schulter 35. Im Anschluss daran ist die Durchgangsbohrung 33 zylindrisch und enthält lediglich eine Nut 36 für eine Dichtungspackung 37. Im Anschluss an die Nut 36 erweitert sich die Durchgangsbohrung 33 und bildet hier eine Axialfläche 38. Im Anschluss an die Axialfläche 38 setzt sich die Durchgangsbohrung 33 mit einer im Wesentlichen zylindrischen Wand 39 bis zum hinteren Ende fort.

Der äußere Verrieglungshülsenabschnitt 5 ist rohrförmig und enthält eine Durchgangsöffnung 40. Die Durchgangsöffnung 40 beginnt mit einem vorderen Abschnitt 41, dessen Durchmesser an den Außendurchmesser des Abschnitts 30 angepasst ist. Die Länge entspricht ebenfalls etwa der Länge des Abschnittes 30. Im vorderen Bereich ist der Abschnitt 41 ausgedreht, um Platz für einen Sprengring 42 zu schaffen, mit dessen Hilfe der äußere Verrieglungshülsenabschnitt 5 in axialer Richtung auf dem inneren Verriegelungshülsenabschnitt 6 festgelegt wird. Die hierzu erforderliche Sprengringnut in dem Abschnitt 30 ist nicht weiter dargestellt.

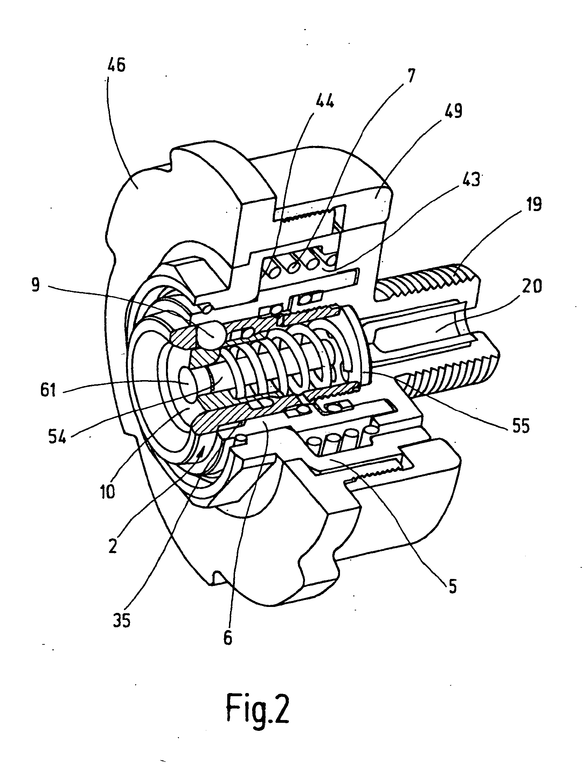

Im Anschluss an den Abschnitt 41 öffnet sich die Durchgangsöffnung 40, wie dies die Zusammenbauzeichnung in Fig. 2 erkennen lässt. Hierdurch entsteht eine Kammer 43, in der die Feder 7 sitzt.

Aufgrund der Durchmesservergrößerung der Durchgangsöffnung 40 entsteht eine Radialschulter 44 (Fig. 2), die ebenfalls als Widerlager für die Schraubendruckfeder 7 wirkt. In dieser Radialschulter 44 ist eine mit der Bohrung 21 korrespondierende achsversetzte Längsbohrung enthalten. Diese Bohrung ist in den Figuren nicht zu erkennen.

In Verlängerung der Durchgangsöffnung 40 weist der äußere Verrieglungshülsenabschnitt 5 zwei in Axialrichtung zeigende Laschen 45 auf, die hinsichtlich ihrer Abmessung, d.h. der Erstreckung in Umfangsrichtung und der axialen Länge an die zugehörige Nockenbahn 15 angepasst sind. Die Dimensionierung ergibt sich aus der unten angegebenen Funktionsbeschreibung.

Die Außenunfangsfläche des äußeren Verrieglungshülsenabschnittes 5 ist sechskantig um eine drehfeste Verbindung mit einem Greifring 46 zu erhalten. Der Greifring 46 enthält eine Durchgangsöffnung 47, deren Innenkontur an die Außenunfangsfläche des äußeren Verriegelungshülsenabschnitts 5 angepasst ist.

Im vorderen Bereich ist die Durchgangsöffnung 47 verjüngt und passt damit über einen sechskantigen Fortsatz 48auf der Vorderseite des äußeren Verrieglungshülsenabschnittes 5. Zur axialen Sicherung des Greifrings 46 auf dem äußeren Verrieglungshülsenabschnitt 5 ist eine Überwurfmutter 49 vorgesehen, die auf das Gewinde 51 des Greifrings aufgeschraubt wird.

Die Feder 7 ist, wie bereits erwähnt, als Schraubendruckfeder ausgeführt und weist zwei abgewinkelte in Axialrichtung zeigende Enden 52 und 53 auf. Das Federende 52 steckt in der Bohrung 21 des hinteren Grundkörperteils 2, während das Federende 53 in der Bohrung der Schulter 44 eingesetzt ist. Auf diese Weise erzeugt die Schraubenfeder 7 für die Verrieglungshülse 4 nicht nur eine Druckkraft in axialer Richtung von dem Flansch 14 weg, sondern zusätzlich auch ein Drehmoment in Umfangsrichtung.

Die Stufenbohrung 24 bildet einen Aufnahmeraum für den Stecker 8. Um das im Stecker 8 enthaltene Drosselventil zu öffnen erstreckt sich in axialer Richtung durch die Stufenbohrung 24 ein Stößel 54, der von einer gelochten Trägerplatte 55 ausgeht. Die Trägerplatte 55 ist im montierten Zustand zwischen einer Schulter in dem hinteren Grundkörperteil 3 und der axialen Stirnfläche des vorderen Grundkörperteils 2 eingespannt.

Um bei gezogenem Stecker 8 die Haltekugeln 9 in der radial äußeren Stellung festzuhalten, ist die Steuerhülse 10 vorgesehen, die in der Stufenbohrung 24 axial beweglich ist. Die Steuerhülse 10 hat eine etwa becherförmige Gestalt mit einem zylindrischen Kragen 56, einem Boden 57, durch den eine konzentrische Öffnung 58 hindurchführt, und einem radial nach außen ragenden Bund 59. Der Bund 59 ist im Durchmesser so bemessen, dass er mit der Anlageschulter 25 zusammenwirkt und einen Anschlag bildet bezüglich einer nach vorne, d.h. bezogen auf Fig. 1 nach links, gerichteten Bewegung. Der Außendurchmesser des Kragens 56 entspricht der lichten Weite der Durchgangsbohrung 24 im Bereich der Radialbohrungen 28. Der Durchmesser der Öffnung 58 ist an dem Stößel 24 angepasst, und zwar speziell an einen am freien Ende des Stößels 54 vorgesehenen Kopf 61.

Um die Steuerhülse 10 in der vorgeschobenen Stellung zu halten ist eine Druckfeder 62 vorhanden, die sich einerseits an dem Teller 55 und andererseits an dem Boden 57 abstützt.

Fig. 2 zeigt den zusammengebauten Zustand der Steckbuchse 1. Dieser zusammengebaute Zustand wird wie folgt erreicht:

In den Gewindeansatz 19 wird von der Vorderseite her das Filter 20 eingesteckt. Die Dichtungspackung 23 wird in die Ringnut 22 eingelegt. Sodann wird auf den vorderen Grundköperteil 2, nachdem dieser mit den Dichtungen bestückt ist, die Steuerhülse 10 in die Durchgangsbohrung 24 eingesteckt. In die Steuerhülse 10 wird die Feder 62 eingelegt. Der vordere Grundkörperteil 2 wird sodann nach dem Einsetzen der Haltekugeln 9 in die Radialbohrungen 28 von vorne her in den inneren Verriegelungshülsenabschnitt 6 eingesteckt. Anschließend wird der vordere Grundkörperteil 2 mit dem darauf sitzenden inneren Verriegelungshülsenabschnitt 6 in das Innengewinde 11 eingeschraubt. Anschließend wird die Feder 7 aufgeschoben, wobei das Federende 52 in die Bohrung 21 eingefädelt wird. Daran anschließend wird der äußere Verriegelungshülsenabschnitt 5 aufgesteckt und zwar so, dass das Federende 53 in die entsprechende Bohrung in der Schulter 44 findet. Durch Einsetzen des Sprengrings 42 wird der äußere Verriegelungshülsenabschnitt 5 auf den inneren Verriegelungshülsenabschnitt 6 in axialer Richtung festgelegt. Der äußere Verriegelungshülsenabschnitt 5 ist jetzt zwar gegenüber dem inneren Verriegelungshülsenabschnitt 6 drehbar, doch in beiden Achsrichtungen festgelegt. Die eine axiale Sicherung bewirkt der Sprengring 42, während die andere axiale Sicherung über die Schulter 31 in Verbindung mit der Schulter 44 erreicht wird.

Schließlich wird von vorne her der Greifring übergestülpt und mit Hilfe von der Rückseite her aufgeschraubten Überwurfmutter 49 gesichert.

Ehe auf die Funktionsweise eingegangen wird, sei zunächst kurz der Aufbau des Steckers erläutert, soweit dies für das Verständnis der Erfindung wesentlich ist.

Der Stecker 8 weist einen wesentlichen rotationssymmetrischen Steckergrundkörper 70 auf, der im vorderen Bereich zylindrisch ist und eine Fangrille 71 enthält. Am hinteren Ende bildet der Steckergrundkörper 70 einen Bund 72 der gleichzeitig als Anlage für eine Hohlschraube 73 dient, die drehbar auf dem vorderen zylindrischen Teil des Steckergrundkörpers 70 sitzt. Die Hohlschraube ist in bekannter Weise mit einem Außengewinde versehen und dient dazu, den Stecker 8 in einem Anschlussstutzen eines Flaschenventils festzuschrauben.

Durch den Steckergrundkörper 70 führt in axialer Richtung eine Stufenbohrung 74 hindurch, die zu der Außenumfangsfläche koaxial ist. Im vorderen Bereich der Stufenbohrung 74 sitzt ein Drosselventilkörper 75, der mit Hilfe einer Schraubendruckfeder 76 gegen einen Ventilsitz 77 angepresst wird. Zufolge seitlicher Abflachungen 78 bleibt eine definierte Restleckage, wenn der Drosselventilkörper 75 gegen den Ventilsitz 77 angepresst ist.

In das hintere Ende der Stufenbohrung 74 ist ein rohrförmiges Federwiderlager 79 eingeschraubt.

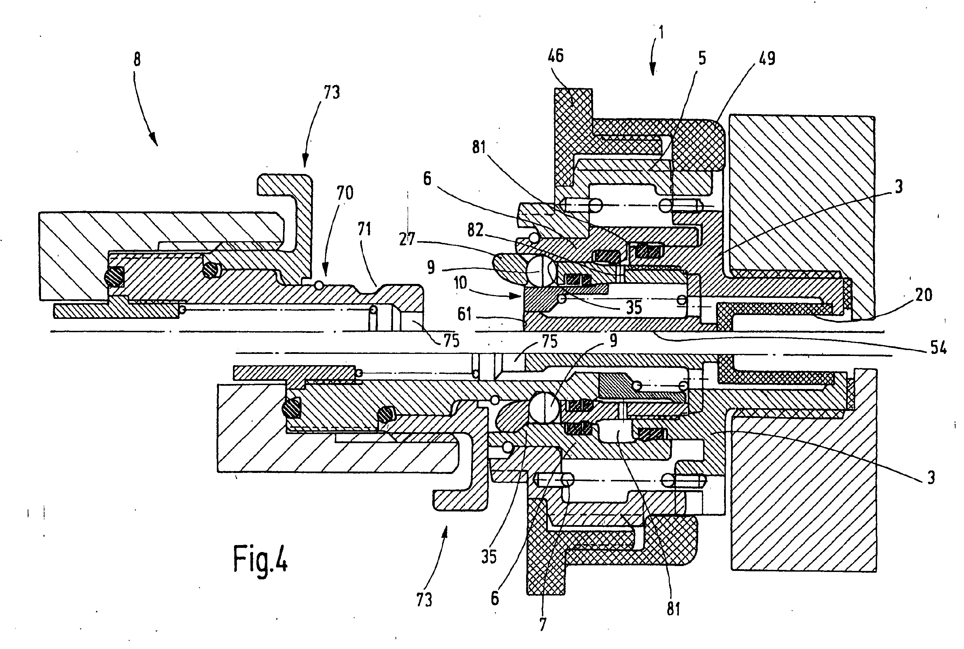

Wie sowohl die Zusammenbauzeichnung 2 als auch die Zeichnung mit der Funktionsdarstellung gemäß Fig. 4 erkennen lässt, entsteht zwischen der Außenumfangsfläche 29 des vorderen Grundkörperteils 2 bzw. der Außenumfangsfläche 12 des hinteren Grundkörperteils 2 einerseits und der Durchgangsbohrung 33, die durch den inneren Verriegelungshülsenabschnitt 6 hindurchführt, eine Kammer 81, die nach vorne durch die Stirnfläche 13 des hinteren Grundkörperabschnittes 3 und nach vorne durch die Schulter 32 begrenzt ist. Diese Kammer ist außerdem durch die Dichtungspackungen 23 und 37 abgedichtet. In die Kammer 81 führt wenigstens eine Radialbohrung 82, die eine strömungsmäßige Verbindung zwischen der Kammer 81 und der Durchgangsbohrung 24 besteht.

Wegen der strömungsmäßigen Verbindung zwischen der Kammer 81 und dem Aufnahmeraum für den Stecker 8 in Gestalt der Bohrung 24 entsteht in der Kammer 81 ein Druck, wenn der Stecker 8 eingesteckt ist und über diesen unter Druck stehende Atemluft zugeführt wird. Der somit in der Kammer 81 herrschende Druck ist bestrebt, die Verriegelungshülse 4 in dieselbe Richtung zu schieben, wie dies auch die Druckfeder 7 tut.

Wie im Einzelnen beschrieben ist, wird somit die Betätigungshülse 4 in eine Richtung vorgespannt, in der die Haltekugeln 9 mit der Kugelrille 71 in Eingriff gehalten werden.

Fig. 4 zeigt in der oberen Hälfte die Situation vor dem Einstecken des Steckers 8. Wie zu erkennen ist, wird von der Druckfeder 62 die Steuerhülse 10 nach vorne in Richtung auf die Mündung des Aufnahmeraums 24 in Gestalt der Stufenbohrung vorgeschoben. In dieser Position fluchtet die Außenseite des Bodens 57 mit Stirnseite des Kopfes 61. Der Kragen 56 der Steuerhülse 10 liegt neben den Haltekugeln 9, so dass diese aus der Stufenbohrung 24 nach außen gedrängt gehalten sind. Sie stehen in dieser Position über die Außenumfangsfläche 29, jedoch nicht über den Bund 27 über. Die radial außen liegenden Haltekugeln 9 stehen mit der kegelstumpfförmig abgeschrägten Schulter 35 in Eingriff und verhindern, dass die Verriegelungshülse 4 ihre axial vordere Stellung einnehmen kann, in der die Schulter 35 an dem Ringbund 27 anliegen würde.

In der gezeigten hinteren Stellung tauchen außerdem die Laschen 45 durch die Nuten 16 des Flansches 14.

Die in Fig. 4 oben gezeigte Zwangsstellung ist eine Zwangsstellung, die durch das Zusammenwirken der radial außen liegenden Haltekugeln 9 in Verbindung mit der Schulter 35 gegen die Wirkung der Feder 7 aufrecht erhalten wird.

Beim Einstecken des Steckers 8 wird die Steuerhülse 10 gegen die Wirkung der Feder 62 zurückgedrückt. Gleichzeitig stößt der Stößel 54 den Drosselventilkörper 75 zurück, womit eine weitgehend freie Strömungsverbindung durch den Stecker 8 möglich wird. Sobald der Stecker 8 tief genug eingesteckt ist, stößt die Steuerhülse 10 mit ihrer freien Kante des Kragens 56 auf dem Teller 55 auf. Die Kugelfangrille 71 fluchtet mit den Radialbohrungen 28, so dass die Kugeln 9 sich radial nach innen bewegen können. In dieser Stellung ist außerdem, wie die Fig. 4 erkennen lässt, das vordere Ende des Steckergrundkörpers 70 über eine Dichtungspackung 85 in der Durchgangsbohrung 24 abgedichtet.

Da jetzt die Haltekugeln 9 radial nach innen ausweichen können, kann die Druckfeder 7 die Verrieglungshülse 4 nach vorne, d.h. von dem Flansch 14 wegdrücken. Die Verschiebebewegung der Verriegelungshülse 4 auf der Außenumfangsfläche 29 des inneren Grundkörperabschnittes 2 kommt zum Stillstand, sobald die Schulter 35 an dem Ringbund 27 anliegt. Da der Durchmesser der Durchgangsöffnung 33 im Anschluss an die Schulter 35 gleich dem Außendurchmesser der Umfangsfläche 29 ist, bleiben die Kugeln zwangsläufig in einer Position, in der sie über die Außenumfangsfläche 29 praktisch nicht mehr überstehen, und nur noch nach innen in die Stufenbohrung 24 und damit in die Kugelfangrille 72 hineinragen können. Die Kammer 81 hat, wie der untere Teil von Fig. 4 zeigt, nun ihr größtes Volumen, wobei die Dichtungspackungen 23 und 37 an der Kammer 81 die bestehenden Axialspalten vollständig abdichten.

Gleichzeitig mit dem Vorschieben der Verrieglungshülse 4 kommen die Laschen 75 aus der Nut 16 frei und zwar soweit, bis ihr Ende auf der Höhe des Bodens 18 der Taschen 17 steht. Die gleichzeitig als Torsionsfeder dienende Schraubenfeder 7 kann jetzt außerdem die Verriegelungshülse 4 auf dem Grundkörper 3 drehen soweit, bis die Enden der Laschen vor dem Boden 18 stehen und die Laschen gleichzeitig am seitlichen Begrenzungsanschlag der Taschen 17 anliegen.

Wenn jetzt durch Öffnen des Flaschenventils die geschlossene Kupplungsverbindung zwischen der Steckbuchse 1 und dem Stecker 8 unter Druck gesetzt wird, herrscht dieser Druck auch in der Kammer 81 und erzeugt eine unterstützende Kraft, die die Verriegelungshülse 4 in der Stellung gemäß Fig. 4 unten hält. Die Flächen sind so bemessen, dass bei einem Restdruck von ca. 6 bis 10 bar eine Vorschubkraft von ca. 120 N entsteht.

Selbst wenn jemand bei dieser Betriebssituation die Verriegelungshülse gegen die Wirkung der Feder 7 soweit zurückdrehen würde, bis die Laschen 45 mit den Nuten 16 fluchten, wäre es ihm unmöglich die Verrieglungshülse 4 in Richtung auf den Flansch 14 zurückzuschieben. Die Verriegelungshülse 4 wäre nicht aus der Stellung gemäß Fig. 4 unten axial zu verschieben.

Um die Kupplungsverbindung zwischen dem Stecker 8 und der Steckbuchse 1 zu trennen, muss zunächst das Flaschenventil geschlossen werden. Sodann ist die Kupplungsverbindung drucklos zu machen, in dem an dem Mundstück bzw. der Gesichtsmaske das Entlüftungsventil von Hand geöffnet wird. Damit strömt die Druckluft aus der Kupplung ab und die Kammer 81 wird druckfrei. Jetzt kann der Benutzer an dem Greifring 46 die Verriegelungshülse 4 ein Stück weit verdrehen soweit, bis die Laschen 45 an den Rändern der Nuten 16 der Nockenbahn 15 anstoßen. Erst in dieser Drehposition lässt sie die Verriegelungshülse 4 in Richtung auf den Flansch 14 schieben. Dabei wird die Schulter 35 an den Haltekugeln 9 vorbei bewegt, die jetzt wieder radial nach außen ausweichen können. Die Kraft zum Ausweichen entsteht als Reaktionskraft an der Wand der Kugelfangrille 71 im Zusammenwirken mit der Feder 62. Die Feder 62 wird unter Zwischenschaltung der Steuerhülse den Stecker 8 auswerfen und sich gleichzeitig in die Position nach Fig. 4 oben bewegen. In dieser Position liegt die Außenfläche der Steuerhülse 10 im Bewegungsweg der Haltekugeln 9 und hält diese in der radial außen liegenden Stellung durch einerseits die Verriegelungshülse in der hinteren zurückgezogenen Position arretiert wird und andererseits die Durchgangsöffnung 24 zum Einstecken des Steckers 8 frei gehalten wird.

Wie die Figur erkennen lässt, kann bei eingestecktem Stecker die Atemluft ungehindert an dem Kopf 61 des Stößels 54 vorbei strömen, da der Schaft des Stößels 24 deutlich kleiner ist im Durchmesser, als es der lichten Weite der Öffnung 58 entspricht. Außerdem strömt die Atemluft weiter durch die Löcher in der Lochplatte 55 und von dort durch das Filter 20 in den Lungenautomaten.

Ein Zurückschieben der Verriegelungshülse 4 in die Entriegelstellung ist ohne vorheriges Drehen nicht möglich. Im nicht gedrehten Zustand würden die Laschen 75 an dem Boden 18 anstoßen und ein Verschieben blockieren.

Eine Steckbuchse für Pressluftverbindungen an Atemgeräten weist einen Grundkörper mit einem Aufnahmeraum für einen Stecker auf. Auf dem Grundkörper ist eine Verriegelungshülse axial beweglich mit der Haltekugeln in der Arretierstellung für den Stecker gehalten werden. Zwischen dem Grundkörper und der Verriegelungshülse ist eine Pneumatikkammer wirksam. Diese Pneumatikkammer kommuniziert mit der Pressluft in der Fluidkupplung und sorgt dafür, dass die pneumatische Kraft erzeugt wird, die die Verriegelungshülse in der Verriegelungsstellung hält. Die erzeugte Kraft ist größer als diejenige Kraft die ein Benutzer von Hand aufbringen kann, wenn er versucht die Verriegelungshülse in die Entriegelungsstellung zu schieben.

## Patentansprüche

1. Steckkupplung (1) für Atemschutzgeräte,
mit einem Buchsenkörper (2,3), der einen Aufnahmeraum (24) für einen Stecker (8) enthält, und einen Gewindeansatz (19) aufweist,
mit an dem Buchsenkörper (2,3) beweglich gelagerten Rastmitteln (9) zum Verriegeln des Steckers (8) in der in den Aufnahmeraum (24) eingesteckten Stellung,
mit einer auf dem Buchsenkörper (2,3) verschieblich gelagerten Verriegelungshülse (4), die mit den Rastmitteln (9) zusammenwirkt und die zwischen zwei Axialstellungen hin und her bewegbar ist, wobei sie in der einen Axialstellung die Rastmittel (9) in der Verriegelungsstellung für den Stecker (8) sichert und in der anderen Stellung eine Bewegung der Rastmittel (9) im Sinne eines Entnehmens des Steckers (8) aus dem Buchsenkörper (2,3) freigibt,
mit einem abgedichteten Ringraum (81) mit zwei Axialflächen (13,38) , von denen eine an dem Buchsenköper (2,3) axialfest ist und die andere an der Verriegelungshülse (4) axialfest ist,
mit einer Strömungsverbindung (82) zwischen dem Aufnahmeraum (24) und dem Ringraum (81).

2. Steckkupplung nach Anspruch 1, **dadurch gekennzeichnet, dass** der Aufnahmeraum (24) eine im Wesentlichen rotationssymmetrische Gestalt () aufweist.

3. Steckkupplung nach Anspruch 1, **dadurch gekennzeichnet, dass** der Aufnahmeraum (25) Teil einer Stufenbohrung () ist.

4. Steckkupplung nach Anspruch 1, **dadurch gekennzeichnet, dass** der Aufnahmeraum (24) eine koaxiale Einstecköffnung () aufweist.

5. Steckkupplung nach Anspruch 1, **dadurch gekennzeichnet, dass** der Buchsenkörper (2,3) aus einem rückwärtigen Anschlussstück (3) und einem vorderen Buchsenteil (2) zusammengesetzt ist.

6. Steckkupplung nach Anspruch 5, **dadurch gekennzeichnet, dass** das hintere Buchsenteil (3) und das vordere Buchsenteil (2) miteinander verschraubt sind.

7. Steckkupplung nach Anspruch 1, **dadurch gekennzeichnet, dass** der Aufnahmeraum (24) einen Stößel (54) enthält.

8. Steckkupplung nach Anspruch 7, **dadurch gekennzeichnet, dass** der Stößel (54) koaxial zu dem Aufnahmeraum (24) angeordnet ist.

9. Steckkupplung nach Anspruch 1, **dadurch gekennzeichnet, dass** die Rastmittel (9) wenigstens eine Kugel () umfassen, die in einer Bohrung (28) sitzt, die radial zur Längserstreckung () des Aufnahmeraums (24) ausgerichtet ist.

10. Steckkupplung nach Anspruch 9, **dadurch gekennzeichnet, dass** die Wandstärke () des Aufnahmeraums (24) im Bereich des Rastmittels (9) kleiner ist, als der Durchmesser () des Rastmittels (9).

11. Steckkupplung nach Anspruch 1, **dadurch gekennzeichnet, dass** der Buchsenkörper (2,3) im Bereich des Aufnahmeraums (24) außen rotationssymmetrisch ist.

12. Steckkupplung nach Anspruch 1, **dadurch gekennzeichnet, dass** in dem Aufnahmeraum (24) eine axial bewegliche Steuerhülse (10) angeordnet ist.

13. Steckkupplung nach Anspruch 12, **dadurch gekennzeichnet, dass** die Steuerhülse (10) durch eine Feder (62) in eine Stellung () vorgeschoben ist, in der sich die Steuerhülse (10) im Bewegungsweg () der Rastmittel (9) befindet.

14. Steckkupplung nach Anspruch 12, **dadurch gekennzeichnet, dass** die Steuerhülse (10) rotationssymmetrisch ist.

15. Steckkupplung nach Anspruch 12, **dadurch gekennzeichnet, dass** die Steuerhülse (10) zusammen mit dem Stößel (54) und/oder gegebenenfalls der Außenwand () des Aufnahmeraums (24) eine Drosseleinrichtung () bildet.

16. Steckkupplung nach Anspruch 12, **dadurch gekennzeichnet, dass** die Steuerhülse (10) radial nach außen gegenüber dem Aufnahmeraum (24) abgedichtet ist, derart, dass die Drosseleinrichtung () lediglich zwischen dem Stößel (54) und der Steuerhülse (10) gebildet ist.

17. Steckkupplung nach Anspruch 12, **dadurch gekennzeichnet, dass** der Steuerhülse (10) ein Axialanschlag (25) zugeordnet ist, der derart gestaltet ist, dass der Hub () der Steuerhülse (10) aus dem Aufnahmeraum (24) heraus begrenzt ist.

18. Steckkupplung nach Anspruch 1, **dadurch gekennzeichnet, dass** die Verriegelungshülse (4) und/oder der Buchsenkörper (2,3) Ringnuten () enthalten, durch die der Ringraum (81) zur Außenatmosphäre () hin abgedichtet ist.

19. Steckkupplung nach Anspruch 1, **dadurch gekennzeichnet, dass** die Verrieglungshülse (4) zweiteilig ausgeführt ist und sich aus einem radial inneren Verrieglungshülsenabschnitt (6) und einen zweiten radial äußeren Verrieglungshülsenabschnitt (5) zusammensetzt.

20. Steckkupplung nach Anspruch 19, **dadurch gekennzeichnet, dass** die beiden Verrieglungshülsenabschnitte (5,6) der Verrieglungshülse (4) zumindest in axialer Richtung gegeneinander unbeweglich gesichert sind.

21. Steckkupplung nach Anspruch 1, **dadurch gekennzeichnet, dass** die Verrieglungshülse (4) einen Ringraum (43) enthält, in dem eine Rückholfeder (7) angeordnet ist.

22. Steckkupplung nach Anspruch 21, **dadurch gekennzeichnet, dass** die Rückholfeder (7) die Verrieglungshülse (4) in eine Stellung vorspannt, in der die Rastmittel (9) in einer Stellung gesichert sind, in der sie in das Lichtraumprofil () des Aufnahmeraums (24) hineinragen.

23. Steckkupplung nach Anspruch 21, **dadurch gekennzeichnet, dass** die Feder (7) eine Schraubendruckfeder () ist.

24. Steckkupplung nach Anspruch 21, **dadurch gekennzeichnet, dass** die Rückholfeder (7) an ihren beiden Enden (52,53) jeweils drehfest einerseits mit der Verrieglungshülse (4) und andererseits mit dem Buchsenkörper (2,3) verbunden ist.

25. Steckkupplung nach Anspruch 1, **dadurch gekennzeichnet, dass** der Verrieglungshülse (4) eine Nockenanordnung (15) zugeordnet ist derart, dass eine Verschiebung der Verrieglungshülse (4) aus der einen Axialstellung (), in der die Rastmittel (9) gesperrt sind, in die Axialstellung (), in der die Rastmittel (9) freigegeben sind, solange gesperrt ist, bis die Verrieglungshülse (4) aus einer ersten Drehstellung () in eine zweite Drehstellung () überführt ist.

26. Steckkupplung nach Anspruch 25, **dadurch gekennzeichnet, dass** die Verrieglungshülse (4) durch eine Feder (7) in die erste Drehstellung vorgespannt ist.

27. Steckkupplung nach Anspruch 25, **dadurch gekennzeichnet, dass** die Verrieglungshülse (4) wenigstens einen Nockenfolgefortsatz (45) und der Buchsenkörper (2,3) eine Nockenbahn (15) umfasst.

## Claims

1. Plug coupling (1) for protective breathing apparatus,
with a socket body (2, 3), which contains a receiving area (24) for a plug (8) and has a threaded attachment (19),
with movably disposed catch elements (9) on the socket body (2, 3) to lock the plug (8) in the position in which it is plugged into the receiving area (24), with a displaceably disposed locking bush (4) on the socket body (2, 3), which cooperates with the catch elements (9) and is movable back and forth between two axial positions, wherein in one axial position it secures the catch elements (9) in the locking position for the plug (8) and in the other position releases a movement of the catch elements (9) in the sense of a removal of the plug (8) from the socket body (2, 3),
with a sealed annular space (81) with two axial faces (13, 38), of which one is axially fixed on the socket body (2, 3) and the other is axially fixed on the locking bush (4),
with a flow connection (82) between the receiving area (24) and the annular space (81).

2. Plug coupling according to claim 1, **characterised in that** the receiving area (24) has a substantially rotationally symmetric structure ().

3. Plug coupling according to claim 1, **characterised in that** the receiving area (25) is part of a stepped bore ().

4. Plug coupling according to claim 1, **characterised in that** the receiving area (24) has a coaxial insertion opening ().

5. Plug coupling according to claim 1, **characterised in that** the socket body (2, 3) is composed of a rear connection piece (3) and a front socket part (2).

6. Plug coupling according to claim 5, **characterised in that** the rear socket part (3) and the front socket part (2) are screwed together.

7. Plug coupling according to claim 1, **characterised in that** the receiving area (24) contains a slide (54).

8. Plug coupling according to claim 7, **characterised in that** the slide (54) is arranged coaxially to the receiving area (24).

9. Plug coupling according to claim 1, **characterised in that** the catch elements (9) comprise at least one ball (), which sits in a bore (28) oriented radially to the longitudinal extent () of the receiving area (24).

10. Plug coupling according to claim 9, **characterised in that** the wall thickness () of the receiving area (24) is smaller in the region of the catch element (9) than the diameter () of the catch element (9).

11. Plug coupling according to claim 1, **characterised in that** the socket body (2, 3) is rotationally symmetric on the outside in the region of the receiving area (24).

12. Plug coupling according to claim 1, **characterised in that** an axially movable control bush (10) is arranged in the receiving area (24).

13. Plug coupling according to claim 12, **characterised in that** the control bush (10) is pushed forward by a spring (62) into a position (), in which the control bush (10) is located in the path of movement () of the catch elements (9).

14. Plug coupling according to claim 12, **characterised in that** the control bush (10) is rotationally symmetric.

15. Plug coupling according to claim 12, **characterised in that** the control bush (10) forms a throttle means () together with the slide (54) and/or possibly the outer wall () of the receiving area (24).

16. Plug coupling according to claim 12, **characterised in that** the control bush (10) is sealed radially to the outside relative to the receiving area (24) in such a way that the throttle means () is only formed between the slide (54) and the control bush (10).

17. Plug coupling according to claim 12, **characterised in that** the control bush (10) has an associated axial stop (25), which is configured in such a way that the stroke () of the control bush (10) out of the receiving area (24) is restricted.

18. Plug coupling according to claim 1, **characterised in that** the locking bush (4) and/or the socket body (2, 3) contain annular grooves (), by means of which the annular space (81) is sealed towards the outside atmosphere ().

19. Plug coupling according to claim 1, **characterised in that** the locking bush (4) is configured in two parts and is composed of a radially inner locking bush section (6) and a second radially outer locking bush section (5).

20. Plug coupling according to claim 19, **characterised in that** the two locking bush sections (5, 6) of the locking bush (4) are immovably secured relative to one another at least in the axial direction.

21. Plug coupling according to claim 1, **characterised in that** the locking bush (4) contains an annular space (43), in which a restoring spring (7) is arranged.

22. Plug coupling according to claim 21, **characterised in that** the restoring spring (7) biases the locking bush (4) into a position, in which the catch elements (9) are secured in a position, in which they project into the clearance profile () of the receiving area (24).

23. Plug coupling according to claim 21, **characterised in that** the spring (7) is a coil pressure spring ().

24. Plug coupling according to claim 21, **characterised in that** at its two ends the restoring spring (7) is connected to respectively be fixed against rotation to the locking bush (4), on one side, and to the socket body (2, 3), on the other side.

25. Plug coupling according to claim 1, **characterised in that** the locking bush (4) has an associated cam arrangement (15) so that a displacement of the locking bush (4) out of one axial position (), in which the catch elements (9) are locked, into the axial position (), in which the catch elements (9) are released, is locked until the locking bush (4) is moved out of a first position of rotation () into a second position of rotation ().

26. Plug coupling according to claim 25, **characterised in that** the locking bush (4) is biased into the first position of rotation by a spring (7).

27. Plug coupling according to claim 25, **characterised in that** the locking bush (4) comprises at least one cam follower extension (45) and the socket body (2, 3) comprises a cam race (15).

## Revendications

1. Accouplement à enfichage (1) pour des appareils de protection de la respiration, qui comprend :
- un corps de douille (2, 3) qui contient un espace d'accueil (24) pour une fiche (8) et qui présente un appendice fileté (19),
- montés mobiles sur le corps de douille (2, 3), des moyens d'arrêt (9) destinés à verrouiller la fiche quand elle est en position emmanchée dans l'espace d'accueil (24),
- montée coulissante sur le corps de douille (2, 3), une douille de verrouillage (4) qui coopère avec les moyens d'arrêt (9) et qui peut se déplacer en va et vient entre deux positions axiales avec, dans une de ces positions, avec sécurisation de la fiche (8) en position de verrouillage par les moyens d'arrêt (9) tandis que dans l'autre position un déplacement de ces moyens d'arrêt libère la fiche (8) dans le sens de son dégagement du corps de douille (2, 3),
- une chambre annulaire (81) étanche présentant deux faces axiales (13, 38) dont l'une est solidaire du corps de douille (2, 3) tandis que l'autre est solidaire de la douille de verrouillage (4).

2. Accouplement à enfichage selon la revendication 1, **caractérisé en ce que** l'espace d'accueil (24) est essentiellement de révolution.

3. Accouplement à enfichage selon la revendication 1, **caractérisé en ce que** l'espace d'accueil (24) est une partie d'un alésage étagé.

4. Accouplement à enfichage selon la revendication 1, **caractérisé en ce que** l'espace d'accueil (24) présente une ouverture d'enfichage coaxiale.

5. Accouplement à enfichage selon la revendication 1, **caractérisé en ce que** le corps de douille (2, 3) est composé d'une pièce de raccordement (3) située vers l'arrière et d'une pièce en forme de douille (2) située vers l'avant.

6. Accouplement à enfichage selon la revendication 5, **caractérisé en ce que** les pièces (2, 3) sont reliées par vissage.

7. Accouplement à enfichage selon la revendication 1, **caractérisé en ce que** l'espace d'accueil (24) contient un poussoir (54).

8. Accouplement à enfichage selon la revendication 7, **caractérisé en ce que** le poussoir (54) est coaxial à l'espace d'accueil (24).

9. Accouplement à enfichage selon la revendication 1, **caractérisé en ce que** les moyens d'arrêt (9) comprennent au moins une bille logée dans un alésage (28) orienté radialement par rapport à la direction longitudinale de l'espace d'accueil.

10. Accouplement à enfichage selon la revendication 9, **caractérisé en ce que** dans la zone où se trouve le moyen d'arrêt (9), l'épaisseur de la paroi de l'espace d'accueil (24) est inférieure au diamètre de ce moyen d'arrêt.

11. Accouplement à enfichage selon la revendication 1, **caractérisé en ce que** dans la zone de l'espace d'accueil, le corps de douille (2, 3) présente une surface externe de révolution.

12. Accouplement à enfichage selon la revendication 1, **caractérisé en ce que** dans l'espace d'accueil (24) se trouve une douille de commande (10) mobile en direction axiale.

13. Accouplement à enfichage selon la revendication 12, **caractérisé en ce qu'**un ressort (62) amène la douille de commande (10), par coulissement, à une position (1) dans laquelle cette douille se trouve sur la trajectoire de déplacement des moyens d'arrêt (9).

14. Accouplement à enfichage selon la revendication 12, **caractérisé en ce que** la douille de commande (10) est une pièce de révolution.

15. Accouplement à enfichage selon la revendication 12, **caractérisé en ce que** la douille de commande (10) forme avec le poussoir (54) et/ou le cas échéant la paroi externe de l'espace d'accueil (24) un dispositif d'étranglement.

16. Accouplement à enfichage selon la revendication 12, **caractérisé en ce que** la douille de commande (10) est rendue étanche vers l'extérieur par rapport à l'espace d'accueil (24) de manière que le dispositif d'étranglement est réalisé simplement entre le poussoir (54) et la douille de commande (10).

17. Accouplement à enfichage selon la revendication 12, **caractérisé en ce qu'**à la douille de commande (10) est associée une butée axiale (25) configurée de manière à limiter la course de la douille de commande (10) dans l'espace d'accueil (24).

18. Accouplement à enfichage selon la revendication 1, **caractérisé en ce que** dans la douille de verrouillage (4) et/ou le corps de douille (2, 3) se trouvent des rainures annulaires par lesquelles est assurée l'étanchéité de la chambre annulaire (81) par rapport à l'atmosphère externe.

19. Accouplement à enfichage selon la revendication 1, **caractérisé en ce que** la douille de verrouillage (4) est en deux parties, à savoir une première partie (5) radialement externe et une seconde partie (6) radialement interne.

20. Accouplement à enfichage selon la revendication 19, **caractérisé en ce que** les deux parties (5, 6) de la douille de verrouillage (4) sont sécurisées de manière à ne pas pouvoir se déplace en direction axiale l'une par rapport à l'autre.

21. Accouplement à enfichage selon la revendication 1, **caractérisé en ce que** la douille de verrouillage (4) présente une chambre annulaire (43) dans laquelle est logé un ressort de rappel (7).

22. Accouplement à enfichage selon la revendication 21, **caractérisé en ce que** le ressort de rappel (7) précontraint la douille de verrouillage (4) dans une position où les moyens d'arrêt (9) sont sécurisés dans une position où ces moyens pénètrent dans le profil d'espace libre de l'espace d'accueil (24).

23. Accouplement à enfichage selon la revendication 21, **caractérisé en ce que** le ressort (7) est un ressort hélicoïdal.

24. Accouplement à enfichage selon la revendication 21, **caractérisé en ce que** le ressort de rappel (7) a ses extrémités (54, 53) solidaires en rotation, l'une de la douille de verrouillage (4), l'autre du corps de douille (2, 3).

25. Accouplement à enfichage selon la revendication 1, **caractérisé en ce qu'**à la douille de verrouillage (4) est associé un dispositif à came (15) faisant que le coulissement de la douille de verrouillage (4), pour passer d'une position axiale où les moyens d'arrêt (9) sont bloqués à une position axiale où ces moyens d'arrêt (9) sont libérés, est empêché jusqu'à ce que la douille de verrouillage (4) passe d'une première position de rotation à une seconde position de rotation.

26. Accouplement à enfichage selon la revendication 25, **caractérisé en ce que** la douille de verrouillage (4) est précontrainte par un ressort (7) dans la première position de rotation.

27. Accouplement à enfichage selon la revendication 25, **caractérisé en ce que** la douille de verrouillage (4) comprend au moins un appendice de suivi de came (45) et le corps de douille (2, 3) une piste de came (15).
